(19) Europäisches Patentamt
European Patent Office
Office européen des brevets

(11) Veröffentlichungsnummer: **0 054 231**
**B1**

(12) # EUROPÄISCHE PATENTSCHRIFT

(45) Veröffentlichungstag der Patentschrift: **15.02.84**

(51) Int. Cl.$^3$: **D 21 H 3/38** // C08F220/18, C08F222/08, C08F222/06, C08F212/08, C08F212/10

(21) Anmeldenummer: **81110110.4**

(22) Anmeldetag: **03.12.81**

(54) **Leimungsmittel für Papier und Verfahren zu ihrer Herstellung.**

(30) Priorität: **12.12.80 DE 3046980**
**12.12.80 DE 3046981**
**12.12.80 DE 3046906**

(43) Veröffentlichungstag der Anmeldung: **23.06.82 Patentblatt 82/25**

(45) Bekanntmachung des Hinweises auf die Patenterteilung: **15.02.84 Patentblatt 84/7**

(84) Benannte Vertragsstaaten: **CH DE FR GB LI NL**

(56) Entgegenhaltungen:
**DE-A-2 207 114**
**DE-A-2 304 586**
**DE-A-2 748 346**
**DE-B-1 621 688**

(73) Patentinhaber: **BAYER AG, Zentralbereich Patente, Marken und Lizenzen, D-5090 Leverkusen 1, Bayerwerk (DE)**

(72) Erfinder: **von Bonin, Wulf, Dr., Mendelssohnstrasse 30, D-5090 Leverkusen 1 (DE)**
Erfinder: **Mummenhoff, Peter, Dr., Silesiusstrasse 76, D-5000 Koeln 80 (DE)**
Erfinder: **Bäumgen, Heinz, Buchenweg 10, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Leimungsmittel für Papier und Verfahren zu ihrer Herstellung

Die vorliegende Erfindung betrifft Leimungsmittel für Papier auf der Basis von speziellen Maleinsäureanhydrid-Copolymerisaten und ein Verfahren zu ihrer Herstellung.

Die Herstellung von Copolymerisaten des Maleinsäureanhydrids mit Vinylmonomeren bzw. Olefinen ist seit langem Stand der Technik. Zumeist werden bei solchen Polymerisationen alternierende Copolymerisate erhalten, d.h., die Monomeren werden in Molverhältnissen von im wesentlichen 1:1 eingebaut. Dies gilt insbesondere für Copolymerisate von Maleinsäureanhydrid mit α-Olefinen, Vinylaromaten, Vinylestern, Vinylethern, Alylestern und Dienen. Schwierig oder gar nicht in nennenswertem Umfang copolymerisierbar ist Maleinsäureanhydrid beispielsweise mit Acrylestern.

Es hat daher erheblicher Anstrengungen bedurft und erforderte sehr spezialisierte Polymerisationstechniken, z.B. Copolymerisate des Maleinsäureanhydrids mit derartigen Monomerentypen wie z.B. Styrol herzustellen, die weniger als 50 Mol-% Maleinsäureanhydrid einigermassen homogen eingebaut enthalten. Die so zugänglich gewordenen Styrol-Maleinsäureanhydrid-Copolymerisate mit z.B. 10–40 Mol-% eingebautem Maleinsäureanhydrid zeichnen sich durch einen gegenüber dem Homopolystyrol erheblich erhöhten Erweichungspunkt und damit erhöhte Schmelzviskosität aus.

Abgesehen davon, dass in konventionellen Maleinsäureanhydrid-Copolymeren mit vorwiegend alternierendem Aufbau oftmals eine zwangsläufig für Hydrophobierungszwecke zu hohe Anzahl an potentiell hydrophilen Gruppen vorgegeben ist, ist auch die bisherige Herstellung solcher Polymerisate entweder an die Mitverwendung von Hilfslösungsmittel oder an den Einsatz von schweren Schneckenmaschinen gebunden, beides Erfordernisse, die einer Vereinfachung bedürfen.

Darüber hinaus sind preiswerte und umweltfreundliche Verfahren wünschenswert, mit denen niedrigschmelzende Maleinsäureanhydrid-Copolymerisate hergestellt werden können, die einmal das Anhydrid in Mengen von 5–30 Gew.-% in relativ homogener Verteilung eingebaut enthalten und zum anderen bei Temperaturen unter 200°C in einem einfachen Rührkesel ohne besondere Massnahmen zur Reaktionsführung und ohne Hilfslösungsmittel, d.h. als Massepolymerisation in der Schmelze durchgeführt werden können.

Derartige Polymerisate wären nicht nur besonders leicht verarbeitbar, sondern stellten auch wünschenswerte Zwischenprodukte für weitere Reaktionen an der eingebauten Maleinsäureanhydridgrupe dar, insbesondere in solchen Fällen, wo ein zu hoher Anteil an reaktionsfähigen Zentren im Polymerisat unerwünscht ist, etwa bei der Umsetzung zu Emulgatoren, zu sonstigen oberflächenwirksamen Hilfsstoffen, Textilausrüstungsmitteln oder Pfropfpolymerisaten.

Von besonderem Interesse wären solche Polymerisate jedoch als Zwischenprodukte für die Herstellung von Papier-Leimungsmitteln.

Es ist nämlich bekannt, dass konventionelle, d.h. vorwiegend alternierend aufgebaute Maleinsäureanhydrid-Copolymerisate z.B. durch Umsetzung mit Ammoniak in gut wirksame Leimungsmittel überführt werden können, ein Effekt, der zwar bei Diisobutylen als Conomomerem, nicht aber bei z.B. Styrol als Comonomerem beobachtet wird, denn im letzteren Falle ist das alternierend aufgebaute Polymere zu hydrophil, um eine ausreichende Leimungswirkung entfalten zu können.

Überraschenderweise wurde nun gefunden, dass die gewünschten niedrigschmelzenden Polymerisate durch vorzugsweise lösungsmittelfreie Polymerisation in Gegenwart von ungesättigten Aldehyden oder insbesondere von davon abgeleiteten Enolethern durchgeführt wird. Wie gefunden wurde, lassen sich Monomerengemische aus Vinylaromaten wie Styrol innerhalb bestimmter Konzentrationsgrenzen mit Maleinsäureanhydrid und Methacrylaten oder Acrylaten wie Butylacrylat, gegebenenfalls mit untergeordneten Mengen weiterer Monomeren bei Mitverwendung von ungesättigten Enolethern, insbesondere solchen, die sich von Tetrahydrobenzaldehyden ableiten (oder auch diesen Aldehyden selbst) und ohne Mitverwendung zusätzlicher Lösungsmittel, mit Radikalinitiatoren in einem einfachen Rührgefäss bei 120 bis 250°C praktisch vollständig zu einem Polymerisat umsetzen, dessen Schmelzviskosität etwa eine Zehnerpotenz unter der von Polymerisaten liegt, die ohne diese Enolether bzw. Aldehyde hergestellt werden. Derartige lösungsmittelfrei erhältiche Polymerisate sind hervorragende Ausgangsmaterialien zur Herstellung von ausgezeichnet wirksamen Papier-Leimungsmitteln, indem man die Anhydridgruppe mit anorganischen oder organischen Basen, insbesondere mit Ammoniak, umsetzt.

Das erfindungsgemässe Verfahren erlaubt somit die lösungsfreie Herstellung von Maleinsäureanhydrid-Copolymerisaten mit einem Maleinsäureanhydridgehalt von unter 50 Mol-%, die in besonderem Masse geeignet sind, zu Leimungsmitteln verarbeitet zu werden.

Gegenstand der Erfindung sind Papierleimungsmittel in Form einer wässrigen Zubereitung von Maleinsäureanhydrid-Copolymerisaten, deren Anhydridgruppen mit der 0,2- bis 10fachen molaren Menge an organischen oder anorganischen Basen umgesetzt worden sind, oder mit primär-tertiären Diaminen, vorzugsweise mit 1-Dimethylaminopropylamin-3, und die Reaktionsprodukute anschliessend mit Epichlorhydrin oder mit anorganischen oder organischen Säuren, vorzugsweise mit Essigsäure, unter Salzbildung umgesetzt worden sind,

wobei die Copolymerisate aufgebaut sind aus polymerisierten Einheiten von

a) 5-75, vorzugsweise 15-55 Gew.-% eines Vinylaromaten,
b) 10-75, vorzugsweise 35-65 Gew.-% Acryl- und/oder Methacrylsäure-$C_1$-$C_{18}$-Alkylester,
c) 5-35, vorzugsweise 10-25 Gew.-% Maleinsäureanhydrid,
d) 0-25, vorzugsweise 0-15 Gew.-% weiteren Vinylmonomeren, und
e) 0,1-10, vorzugsweise 0,5 bis 3,5 Gew.-%, bezogen auf die Summe der Monomeren a)-d), die stets 100 Gew.-% beträgt, eines ungesättigten Aldehyds bzw. eines davon abgeleiteten Enolethers.

Zur Herstellung der erfindungsgemässen Leimungsmittel werden die Monomeren a)-e) in Gegenwart von 0,01-3, vorzugsweise von 0,1-0,5 Gew.-%, bezogen auf die Summe der Monomeren a)-d), üblicher Radikalinitiatioren bei 10-250°C, vorzugsweise bei 140-180°C, unter Rühren und vorzugsweise lösungsmittelfrei polymerisiert. Die Anhydridgruppen des so erhaltenen Polymerisats werden entweder mit anorganischen und/oder organischen Basen, insbesondere mit Ammoniak, umgesetzt und das Umsetzungsprodukt in eine wässrige Zubereitung überführt, die als Leimungsmittel für Papier verwendet wird, oder die Anhydridgruppen werden mit primär-tertiären Diaminen, vorzugsweise mit 1-Dimethylaminopropylamin-3, zur Reaktion gebracht und das Reaktionsprodukt anschliessend mit Epichlorhydrin oder mit anorganischen oder organischen Säuren, vorzugsweise mit Essigsäure, unter Salzbildung umgesetzt und das Umsetzungsprodukt in eine wässrige Zubereitung überführt, die als Leimungsmittel für Papier verwendet wird.

Erfindungsgemässe Leimungsmittel sind sowohl solche, die als Masseleimungsmittel, d.h. in der Papiermasse bei der Herstellung des Papiers verwendet werden, als auch sogenannte Oberflächenleimungsmittel, die auf das fertig gebildete Papierblatt aufgetragen werden. Als Papiere kommen prinzipiell alle Papiere in Betracht, z.B. ungefüllte oder mit Kreide, Talkum oder Clay gefüllte, oder Papiere hergestellt aus oder enthaltend Holzschliff, Sulfit-, Sulfat- oder Regenerat-Zellstoff; auch Papierstoff, der synthetische Pulpen enthält, kommt in Betracht. Die Mitverwendung von Alaun, Stärke, Aufhellern, Farbstoffen und weiteren Leimungsmitteln ist ebenfalls in Betracht zu ziehen. Selbstverständlich ist die Wirkung der Leimungsmittel nicht auf Papier beschränkt, sie sind auch für Pappen und Kartons, Gewebe und Vliesstoffe aus natürlichen und synthetischen Rohstoffen anwendbar.

Als Vinylaromat kommt vorzugsweise Styrol in Frage, geeignet sind aber auch kern- und seitenketten-substituierte Vinylaromaten wie Vinylnaphtalin, Styrole mit Hydroxyl-, Alkyl-, Halogen- oder Halogenalkyl-Substituenten im Kern und/ oder der Seitenkette wie Methylstyrole, Chlorstyrole, Fluoralkylstyrole, α-Methylstyrole und Isopropenylphenol.

Geeignete (Meth)Acrylate sind Ester der Methacrylsäure und vorzugsweise Acrylsäure von Alkoholen mit 1-18 C-Atomen. Aus Gründen der leichten Zugänglichkeit und des ausreichend hohen Siedepunktes wird bevorzugt n-Butylacrylat verwendet. Natürlich sind auch andere (Meth)Acrylsäureester z.B. von Methanol, Ethanol, Propanol, Butanolen, Cyclohexanol, Benzylalkohol, Isooctanol, Isononylalkohol, Decanol und Oleyalkohol, gegebenenfalls im Gemisch miteinander, zu verwenden, ebenfalls Ester von Alkoholen mit sonstigen funktionellen Gruppen, sofern sie nicht mit dem Maleinsäureanhydrid zu unerwünschten Nebenreaktionen führen.

Als gegebenenfalls einzusetzende weitere Vinylmonomere bzw. deren Gemische sind z.B. geeignet: Acrylsäure, Methacrylsäure, Fumarsäure, Maleinsäure, Itakonsäure, (Meth)Acrylnitril, (Meth)Acrylamide und deren N-Substitionsprodukte, Vinylpyrrolidon, Vinylketone, Vinylamide, Vinylhalogenide, Vinylether, Vinylester wie Vinylacetat, Olefine, wie Ethylen, Propylen, Butylen, Isobutylen, insbesondere solche mit relativ hohen Siedepunkten wie Diisobutylen, Oligobutylene, Oligopropylene, Octadecen, Limonen, Norbornen und Diester und Halbester der Malein- bzw. Fumar- oder Itakonsäure. Unter diesen Monomeren sind Acrylnitril und/oder Olefine wie Octadecen bevorzugt.

Geeignete ungesättigte Enolether sind insbesondere solche, die folgende Basisstruktur aufweisen:

$$R_1R_2C{=}CR_3{-}CHR_4{-}CR_5{=}CR_6OR_7$$

wobei
$R_1$, $R_3$ und $R_4$ = H und /oder Alkyl, vorzugsweise H und/oder Methyl,
$R_2$ und $R_5$ = H und/oder Alkyl mit 1-4 C-Atomen, wobei jedoch $R_2$ und $R_5$ vorzugsweise zusammen eine $-CH_2-CH_2-$Gruppierung bedeuten, über die die mit ihnen verbundenen C-Atome zum Ring geschlossen sind,
$R_6$ = Alkyl mit 1-4 C-Atomen, vorzugsweise aber H, und
$R_7$ = Alkyl- oder Alkylarylrest mit 1-18 C-Atomen, vorzugsweise Benzyl.

Bevorzugt sind ungesättigte Enolether, die sich vom 1,2,5,6-Tetrahydrobenzaldehyd ableiten, insbesondere der Benzylether:

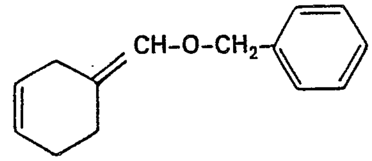

Als Tetrahydrobenzaldehyde sind substituierte und/oder unsubstituierte Tetrahydrobenzaldehyde geeignet, insbesondere 1,2,5,6-Tetrahydrobenzaldehyd und/oder seine substituierten Analogen, wie z.B. 3- oder 4-Methyl-1,2,5,6-Tetrahydrobenzaldehyd.

Die Wirkungsweise dieser Hilfsmonomeren, die möglicherweise mit Maleinsäureanhydrid Komplexe bilden, besteht darin, dass mit ihrer Hilfe überraschenderweise niedrigschmelzende Polymerisate gebildet werden, und die spontane Polymerisation der beispielsweise Styrol und Maleinsäureanhydrid nebeneinander enthaltenden Reaktionsmischung bei tiefen Temperaturen verhindert wird, ohne die erwünschte Polymerisation bei den verfahrensgemäss hohen Temperaturen zu behindern.

Als Radikalinitiatoren kommen die üblichen, dem Stande der Technik entsprechenden Initiatoren, z.B. Azoverbindungen oder peroxidische Verbindungen, in Betracht. Vorzugsweise werden solche, insbesondere peroxidische Initiatoren verwendet, die bei 120°C noch Halbwertszeiten über 1 Min. aufweisen, wie z.B. Benzoylperoxid, t-Butylperoctoat, Di-t-butylperoxid, t-Butylhydroperoxid, Dicumylperoxid und Cumolhydroperoxid.

Von Interesse sind auch Initiatorgemische. Prinzipiell ist auch Wärme allein oder energiereiche Strahlung zum Auslösen der Polymerisation in Betracht zu ziehen.

Unter anorganischen Basen werden insbesondere Hydroxide, Carbonate, Bicarbonate oder Alkoholate der Alkalimetalle verstanden, besonders bevorzugt wird jedoch Ammoniak zur Umsetzung der Anhydridgruppen enthaltenden Polymerisate zu gut wirksamen Leimungsmitteln eingesetzt. Es kommen auch organische Basen in Betracht, insbesondere primäre, sekundäre oder tertiäre Amine, wobei letztere vor allem in Gegenwart von Wasser einzusetzen sind, so dass eine Salzbildung stattfinden kann. Solche Basen sind z.B. Alkylamine, Hydroxyalkylamine oder substituiertes oder unsubstituiertes Morpholin und Pyridin wie etwa Methylamin, Ethylamin, Diethylamin, Triethylamin, Ethanolamin, Propanolamin, Diethanolamin und Triethanolamin. Die Amine können im Gemisch miteinander bzw. zusammen mit Ammoniak oder den anorganischen Basen verwendet werden.

Von besonderem Interesse ist jedoch die Verwendung von Ammoniak, wobei sich wahrscheinlich zunächst die Amid-Ammoniumsalze oder Polymerisate bilden, die in wässrigen oder wässrigalkoholischen Medien löslich bzw. suspendierbar sind. Während des Leimungsvorganges können möglicherweise die Halbamidstrukturen in Imidgruppen mit verringerter Wasserlöslichkeit umgewandelt werden. Ob eine Imidbildung bereits in der wässrigen Leimungsmittelzubereitung erfolgen kann, dürfte sich nach den Umsetzungsbedingungen richten.

In bezug auf die anzunehmende Halbamid-Ammoniumsalz-Bildung wird Ammoniak zur Umsetzung bevorzugtermassen in mehr als der stöchiometrisch notwendigen Menge eingesetzt, z.B. mit dem Zwei- bis Zehnfachen der stöchiometrischen Menge. Organische Basen werden in stöchiometrischer bzw. in bis zum Zehnfachen der stöchiometrischen Menge eingesetzt, während die anorganischen Basen in Mengen von 0,2 bis 2 Mol pro Anhydridgruppe im Polymerisat, bevorzugt von 0,5 bis 1,8 Mol verwendet werden.

Zur Umsetzung werden die Polymerisate bevorzugt in einer wässrigen Lösung der anorganischen und/oder organischen Base unter Rühren bei Temperaturen von 5 bis 190°C, bevorzugt von 15 bis 120°C aufgelöst, gegebenenfalls unter vorheriger Dispergierung in Wasser. Die Mitverwendung von wasserlöslichen Lösungshilfsmitteln wie Harnstoff, Netzmitteln und Dispergatoren für das Polymerisat ist gegebenenfalls in Betracht zu ziehen; geeignet sind z.B. Aceton, Methanol, Ethanol, Isopropanol oder deren Gemische. Bevorzugt ist Isopropanol, wobei die Menge der Hilfslösungsmittel das Gewicht des eingesetzten Polymerisats nicht überschreiten solte, um Umweltbelastungen bzw. aufwendige Rückgewinnungsmassnahmen zu vermeiden. Der Feststoffgehalt der überraschend niedrigviskosen wässrigen erfindungsgemässen Leimungsmittelzubereitungen liegt zwischen 1 bis 60 Gew.-%, vorzugsweise bei 10 bis 30 Gew.-%. Es sind jedoch auch wasserfreie pulverförmige Zubereitungen in Betracht zu ziehen, die gegebenenfalls am Einsatzort erst in das wässrige Medium überführt werden.

Als primär-tertiäre Diamine werden insbesondere solche eingesetzt, deren primäre und tertiäre Aminogruppe durch eine 2–12, vorzugsweise 2–6 Kohlenstoffatome enthaltende lineare oder verzweigte Kette, die gegebenenfalls noch Sauerstoff- oder Schwefelatome enthalten kann, getrennt ist. Die Substituenten der tertiären Aminogruppe können gleich oder verschieden sein und sind aromatische Reste wie Phenyl, Toluyl, Xylyl, Chlorphenyl, Nitrophenyl, 4-Dimethylaminophenyl, vorzugsweise Phenyl, Toluyl und Xylyl; araliphatische Reste wie Benzyl, 2-Phenylethyl, vorzugsweise Benzyl; Alkylreste mit 1–12, vorzugsweise 1–6 Kohlenstoffatomen, wobei die beiden Substituenten zusammen einen 5- oder 6gliedrigen, gegebenenfalls ein Sauerstoff- oder Schwefelstoffatom enthaltenden alicyclischen Ring bilden können. Derartige Amine entsprechen den beispielhaft angegebenen folgenden Formeln:

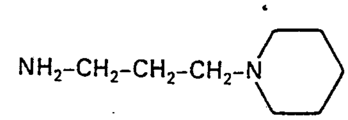

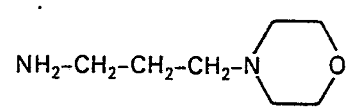

(S)

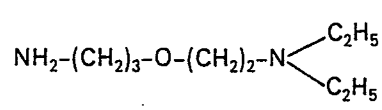

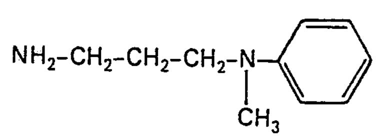

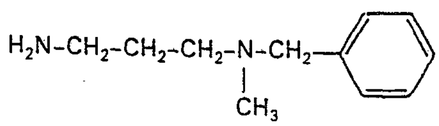

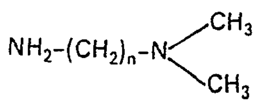

n = 2-6

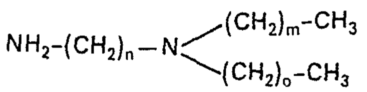

n = 2-6
m = 1-12
o = 1-12

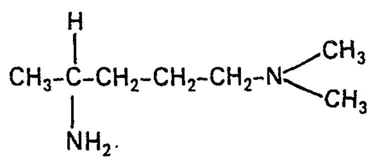

Es ist auch möglich, neben den beschriebenen Diaminen primäre Monoamine mitzuverwenden.

Als im Gemisch mit den Diaminen gegebenenfalls einzusetzende primäre Monoamine eignen sich heterocyclische, aromatische, araliphatische, aliphatische und cycloaliphatische Amine. Diese Amine können gesättigte oder ungesättigte Kohlenwasserstoffreste, gegebenenfalls substituierte Kohlenwasserstoffreste enthalten. Die Substituenten können z.B. Halogene wie Chlor, phenolische oder aliphatische primäre, sekundäre oder tertiäre OH-Gruppen, Nitrogruppen, Carboxylgruppen, Thiolgruppen, Ether- oder Thioethergruppen, Sulfonat- oder Urethan- bzw. Amidgruppen sein.

Bevorzugt werden (falls überhaupt Monoamine mitverwendet werden) Ammoniak und/oder aliphatische primäre Monoamine mit 1–20 Kohlenstoffatomen, die gegebenenfalls OH-Gruppen enthalten, oder cycloaliphatische Monoamine mit 5–7 Kohlenstoffatomen verwendet. Zu der bevorzugten Klasse von Aminen gehören beispielsweise Methylamin, Propylamin, tert.-Butylamin, Cyclopentylamin, Cyclohexylamin, Hexahydrobenzylamin, 2-Ethylhexylamin, Oleylamin, Stearylamin, Allylamin, Ethanolamin, Propanolamin, Glucamin oder deren Gemische.

Das Diamin und gegebenenfalls Monoamin wird in annähernd äquimolarer Menge, bezogen auf die Anhydridgruppe des Ausgangspolymerisates, eingesetzt; bevorzugt soll das zum Einsatz gelangende Amin 0,8–1,3 Mol primäre Aminogruppen, bezogen auf 1 Mol Anhydridgruppen des Polymerisats, enthalten.

In dem gegebenenfalls zur Anwendung kommenden Gemisch von Diamin und primärem Amin soll das Molverhältnis von Diamin zu primärem Amin 1:10 bis 1:0,1 betragen, bevorzugt wird ein Molverhältnis von 1:4 bis 1:0,3.

Die Aminkomponenten können als Gemisch oder nacheinander zur Reaktion gebracht werden.

Die Umsetzung der Polymerisate mit den Aminen erfolgt am zweckmässigsten lösungsmittelfrei bei 80 bis 250°C, vorzugsweise bei 140 bis 200°C im Rührgefäss. Das Abdestillieren des gebildeten Reaktionswassers, gegebenenfalls zusammen mit eventuell noch vorhandenen Restmonomeren, kann vorgenommen werden, ist aber nicht unbedingt erforderlich, so dass auch darauf verzichtet werden kann. Die Umsetzung ist nach ca. 30 bis 360 Min. zumeist beendet. Im allgemeinen lässt man ca. 3 h bei ca. 170°C rühren.

Die Umsetzung des so erhältlichen Umsetzungsproduktes, das nunmehr cyclische Imideinheiten aufweist, mit dem Epichlorhydrin kann ohne oder mit Zusatz von Hilfslösungsmitteln erfolgen, wobei diese möglichst in Wasser löslich und physiologisch unbedenklich sein sollen. Neben Wasser selbst, gegebenenfalls unter Zusatz von Säuren wie z.B. Essigsäure, werden als Lösungsmittel Aceton, Ethanol oder Isopropanol bevorzugt, obgleich natürlich auch andere Lösungsmittel, die den genannten Erfordernissen entsprechen, in Betracht kommen. Die organischen Hilfslösungsmittel werden im allgemeinen in solchen Mengen verwendet, dass die entstehenden Lösungen oder Dispersionen keine Lösungsmittelgehalte über 50% aufweisen, um Umweltbelastungen oder aufwendige Rückgewinnungsmassnahmen zu vermeiden.

Obgleich verschiedenste Quaternierungsmittel prinzipiell für die Umsetzung der Aminogruppen enthaltenden Polymerisate zu gut wirkenden Leimungsmitteln in Betracht zu ziehen sind, wie z.B. Benzylchlorid, Chloracetamid, Dialkylsulfate, Dichlorpropan und Chlorhydrin, hat sich gezeigt, dass bei Verwendung von Epichlorhydrin überlegene Leimungsmittel erhalten werden.

Bezogen auf die im eingesetzten Polymerisat enthaltenen Aminogruppen werden 0,1 bis 5, vorzugsweise 0,5 bis 3,5, insbesondere 0,5 bis 2,5 Mol Epichlorhydrin verwendet.

Die Umsetzung mit dem Epichlorhydrin erfolgt so, dass man dem mit dem Amin umgesetzten Polymerisat oder seiner Lösung bzw. Dispersion, die zweckmässigerweise wässrig ist oder Anteile von Wasser enthält, da dieses die Reaktion beschleunigt, das Epichlorhydrin zusetzt und bei 10 bis 95°C, vorzugsweise 15 bis 80°C, etwa 10 bis 120, vorzugsweise etwa 60 Min. rührt. Dann versetzt man gegebenenfalls mit Wasser und stellt so die gewünschte Konzentration des nunmehr in einer wässrigen Lösung oder Dispersion vorliegenden Leimungsmittels ein. Eine Entfernung des gegebenenfalls mitverwendeten Hilfslösungsmittels, z.B. durch Destillation oder Strippen, kann in allen Verfahrensstufen in Betracht gezogen werden. Es ist empfehlenswert, die Leimungsmittelzubereitungen mit einer Säure, vorzugsweise mit Essigsäure oder Ameisensäure auf pH-Werte von unter 7,5, vorzugsweise von 5 bis 6,5 einzustellen, da dann eine nachträgliche Viskositätsveränderung der Zubereitungen vermieden werden kann.

Obgleich als Säuren verschiedenste organische oder anorganische Säuren bzw. deren Ge-

mische wie HCl, $HNO_3$, $H_2CO_3$, $H_2SO_3$, $H_2SO_4$, $H_3PO_4$ und $HPO_3$ in Betracht kommen, werden aus Gründen der Korrosion vorzugsweise organische Säuren, insbesondere Ameisensäure und/oder Essigsäure verwendet.

Bezogen auf im eingesetzten Polymerisat enthaltene Aminogruppen werden mehr als 0,3, vorzugsweise 0,5 bis 6 Säureäquivalente eingesetzt, wobei die Grenze von 6 Äquivalenten ohne weiteres überschritten werden kann, z.B. wenn eine relativ stark saure Leimungsflotte zum Einsatz kommen soll.

Die Umsetzung mit der Säure erfolgt so, dass man dem mit dem Amin umgesetzten Polymerisat oder seiner Lösung bzw. Dispersion, die zweckmässigerweise Anteile von Wasser enthält, die Säure zusetzt und bei 10 bis 90°C, vorzugsweise 15 bis 50°C etwa 10 bis 120, vorzugsweise etwa 10 Minuten rührt. Dann versetzt man mit weiterem Wasser und stellt so die gewünschte Konzentration des nunmehr in einer wässrigen Lösung oder Dispersion vorliegenden Leimungsmittels ein. Eine Entfernung des gegebenenfalls mitverwendeten Hilfslösungsmittels, z.B. durch Destillation oder Strippen kann in allen Verfahrensstufen in Betracht gezogen werden. Es ist empfehlenswert, die Leimungsmittelzubereitungen mit Essigsäure oder Ameisensäure auf pH-Werte von unter 7, vorzugsweise von 5 bis 6,8 einzustellen.

Die Herstellung der erfindungsgemässen Polymerisate, sowie deren Umsetzungsprodukte, die als Leimungsmittel einzusetzen sind, kann kontinuierlich oder diskontinuierlich, stufenweise oder im Eintopfverfahren nach dem Fachmann vertrauten Technologien erfolgen.

So trägt man beispielsweise das zuvor hergestellte Monomerengemisch, dem gegebenenfalls schon der Initiator beigefügt ist oder getrennt während des Polymerisationsprozesses beigefügt wird, im Verlaufe von wenigen Minuten bis Stunden in ein auf Reaktionstemperatur gehaltenes und mit starkem Rührer und gegebenenfalls Rückflusskühler versehenes Rührgefäss unter Atmosphärendruck oder bei erhöhten Drücken ein. Dann lässt man so lange bei Reaktionstemperatur rühren, bis schwacher oder kein Rückfluss mehr zu beobachten ist, wofür zumeist zwischen 0,5 bis 3 Stunden ausreichen.

Eine interessante und vielfach vorteilhafte Arbeitsweise besteht darin, dass man die (Meth)Acrylatmonomeren (b), das Maleinsäureanhydrid (c), die ganze oder eine Teilmenge der Hilfsmonomeren (e), sowie gegebenenfalls weitere Vinylmonomere (d) in einem Reaktionsgefäss, das drucklos mit z.B. Rückflusskühler oder unter Druck betrieben wird, vorlegt und auf Reaktionstemperatur bringt und zu diesem Monomerengemisch dann im Laufe von 0,5 bis 2 Stunden, gegebenenfalls unter Kühlung, die Vinylaromaten (a) und die Restmenge des Hilfsmonomeren (e), sowie die Initiatoren, beispielsweise als Komponentengemisch, gegebenenfalls auch getrennt, hinzudosiert. Die nach dieser Verfahrensweise erhältlichen Polymerisate, die besonders dann empfehlenswert ist, wenn Maleinsäureanhydrid und Vinylaromat im Molverhältnis 1:>1 bis 1:2 vorliegen, haben eine mindestens ebenso gute Eignung zur Überführung in Leimungsmittel wie die durch simultane Monomerenzusammenführung erhältlichen, neigen aber weniger zu Verfärbungen als diese.

Anschliessend kann das Polymerisat im Kessel weiterverarbeitet werden, oder man trägt das Polymerisat als Schmelze oder Granulat direkt in die gut gerührte wässrige Phase ein und rührt bis zur Ausbildung einer homogenen Lösung bzw. Suspension bei der gewünschten Temperatur. Überschüssige Base, Monomeres oder Lösungsmittelanteile können, falls vorhanden bzw. erforderlich, durch Strippen oder Destillation entfernt werden.

Z.B. kann das mit Diamin umgesetzte Polymerisat im Kessel mit der Säure versetzt werden oder zuvor in eine z.B. 50- bis 70%ige acetonische oder isopropanolische Lösung überführt und diese dann, wie geschildert, weiterverarbeitet werden, oder man trägt das Polymerisat direkt in eine gut gerührte wässrige Essigsäurelösung bzw. Suspension bei der gewünschten Temperatur. Lösungsmittelanteile können, falls vorhanden, bzw. erforderlich, durch Strippen oder Destillation entfernt werden.

Die entstandene wässrige Zubereitung kann direkt oder gegebenenfalls nach weiteren Temperungsprozessen, Entgasungen oder Verdünnungen als Leimungsmittel zum Einsatz kommen. Zumeist erfolgt der Leimungsprozess selbst nach weiterem Verdünnen der wässrigen Zubereitung auf Konzentrationen unter 5 Gew.%.

Es ist auch möglich, der wässrigen Leimungsmittelzubereitung noch Guanidin, Harnstoff, Dicyandiamid, Allophanat u.ä. Amidgruppen enthaltende Substanzen zur Viskositätserniedrigung zuzusetzen. Diese Zusatzstoffe können in Mengen bis zu 50%, bezogen auf Polymerisat, zum Einsatz kommen.

Im folgenden soll das erfindungsgemässe Verfahren beispielhaft erläutert werden. Die angegebenen Teile und Prozente sind, falls nicht anderes vermerkt ist, auf das Gewicht bezogen.

Ziel der vorliegenden Erfindung ist es auch, ein technisch vorteilhaftes, da sehr einfach und quasi im «Eintopfverfahren» durchführbares Verfahren aufzuzeigen, um zu brauchbaren Leimungsmitteln zu kommen. Es handelt sich um ein Verfahren zur lösungsmittelfreien Herstellung spezieller Maleinsäureanhydrid-Copolymerisate und um daraus herstellbare Papierleimungsmittel.

Dementsprechend ist es Ziel der folgenden Beispiele, einmal die vorteilhafte Herstellbarkeit der Maleinsäureanhydrid-Copolymerisate beispielhaft zu verdeutlichen und zum anderen aufzuzeigen, dass die erfindungsgemäss erhältlichen Polymerisattypen als Ausgangsmaterial für Leimungsmittel mit hoher Wirksamkeit geeignet sind.

Der Vorteil des erfindungsgemässen Verfahrens ist demgemäss sowohl in der technisch vorteihaften Herstellbarkeit spezieller Maleinsäureanhydrid-Copolymerisate als auch in deren Verwendbarkeit zur Herstellung gut wirksamer Leimungsmittel zu sehen.

Die im folgenden für die Herstellung von Leimungsmitteln eingesetzten Maleinsäureanhydrid-Copolymerisate werden beispielhaft nach der folgenden allgemeinen Herstellungsvorschrift erhalten:

Der Vinylaromat wird mit dem Acrylat, dem gegebenenfalls mitverwendeten sonstigen Vinylmonomeren und dem Tetrahydrobenzaldehyd bzw. dem ungesättigten Enolether vermischt und dann mit dem Maleinsäureanhydrid versetzt. Anschliessend wird bei 30-45°C gerührt, bis eine Lösung entstanden ist.

Bei Abwesenheit des Enolethers setzt die Polymerisation oftmals schon auf dieser Vorbereitungsstufe unerwünscht ein. Das unterbleibt jedoch, wenn der Enolether anwesend ist.

500 Teile der Monomeren-Lösung werden mit 0,5 Teilen t-Butylperoctoat, 0,5 Tln. t-Butylhydroperoxid und 0,2 Tln. Dicumylperoxid versetzt und dann in ein mit einem kräftigen Rührer und Rückflusskühler versehenes, auf 160°C und 170°C vorgeheiztes Rührgefäss bei Normaldruck im Laufe von 30 Minuten eindosiert. Auch in dieser Verfahrensphase verhindert die Anwesenheit des Enolethers eine unerwünschte Polymerisation ausserhalb des Polymerisationsgefässes. Hierbei ist $N_2$-Atmosphäre nicht notwendig, kann aber in Betracht gezogen werden, z.B., um Verfärbungen zu vermeiden.

Die Monomerenmischung polymerisiert sehr schnell bereits während des Eindosierens, 30–180 Min. nach dem Eintragen der Monomeren ist die Polymerisation beendet.

Zur Herstellung der Umsetzungsprodukte mit Ammoniak wird beispielhaft wie folgt verfahren:

In einem Rührgefäss befindet sich ein Gemisch aus 250 Tln. 25%igem wässrigen Ammoniak und 1500 Tln. Wasser. Unter Rühren lässt man nunmehr 300 Tle. der ca. 170°C warmen Polymerisationsschmelze in das bei Raumtemperatur befindliche Gemisch einlaufen. Hierbei wird das Polymerisat suspendiert bzw. gelöst. Man rührt noch 2 h bei ca. 35–45°C und erhält eine ca. 15%ige wässrige Leimungsmittelzubereitung, die direkt bzw. nach weiterer Verdünnung eingesetzt werden kann.

Zur Herstellung der Umsetzungsprodukte mit Diamin wird als primär-tertiäres Diamin beispielhaft das 1-Dimethylaminopropylamin-3 verwendet. Dieses setzt man nunmehr dem gerührten, frisch hergestellten Polymerisat bei 160°C zu und rührt bei dieser Temperatur während 1,5 Stunden. Hierbei sinkt die Schmelzviskosität des Materials, so dass man unter Rühren auf ca. 110°C abkühlen und gegebenenfalls zum Zwecke der besseren Handhabbarkeit durch Zugeben von Aceton bzw. Isopropanol als Hilfslösungsmittel eine Lösung des polymeren Umsetzungsproduktes herstellen kann. Diese wird noch ca. 30 Min. beim Siedepunkt des Lösungsmittels gerührt und dann zur Umsetzung mit der Säure bzw. dem Epichlorhydrin verwendet.

Die Umsetzung mit der Essigsäure wird beispielhaft bei 20°C vorgenommen. Verwendet werden 50%ige Lösungen der frisch hergestellten basischen Polymerisate. Der Polymerisatlösung wird die Säure zugesetzt, dann wird mit Wasser auf ca. 15% Feststoffgehalt verdünnt. Die so erhaltenen wässrigen Zubereitungen werden als Leimungsmittel verwendet.

Zur Herstellung der Umsetzungsprodukte mit Ameisen- oder Essigsäure wird alternativ beispielhaft wie folgt verfahren:

In einem Rührgefäss befindet sich ein Gemisch aus 250 Tln. 20%iger wässriger Ameisensäure und 1500 Tln. Wasser. Unter Rührern lässt man nunmehr 300 Tle. der ca. 170°C warmen Polymerisatschmelze in das bei Raumtemperatur befindliche Gemisch einlaufen. Hierbei wird das Polymerisat suspendiert bzw. gelöst. Man rührt noch 2 h bei ca. 35–45°C und erhält eine ca. 15%ige wässrige Leimungsmittelzubereitung, die direkt bzw. nach weiterer Verdünnung eingesetzt werden kann.

Die Umsetzung mit dem Epichlorhydrin wird beispielhaft bei 20°C vorgenommen. Verwendet werden 50%ige Lösungen der frisch hergestellten basischen Polymerisate. Der Polymerisatlösung wird etwas Wasser zugesetzt, dann das Epichlorhydrin. Anschliessend wird 1 h bei 20°C gerührt, dann wird mit Wasser auf ca. 15% Feststoffgehalt verdünnt und mit Essigsäure auf einen pH von ca. 6,5 eingestellt. Es ist natürlich auch möglich, die Essigsäure vor dem Verdünnen mit Wasser zuzusetzen, d.h. hier Verfahrensvarianten zu benutzen. Die so erhaltenen wässrigen Zubereitungen werden als Leimungsmittel verwendet.

Zur Herstellung der verfahrensgemässen Polymerisate werden beispielhaft folgende Monomere eingesetzt:

a) a: Styrol
b) a: n-Butylacrylat
   b: Isooctylacrylat
   c: Decylmethacrylat
c) a: Maleinsäureanhydrid
d) a: Acrylnitril
e) a: 1,2,5,6-Tetrahydrobenzaldehyd
   b: Gemisch aus etwa gleichen Teilen 3-Methyl- und 4-Methyl-1,2,5,6-Tetrahydrobenzaldehyd
   c: Enolether des 1,2,5,6-Tetrahydrobenzaldehyds

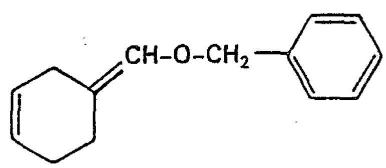

Die einzelnen Polymerisate sind in der folgenden Tabelle 1 zusammengefasst.

Die Polymerisatreihe null bis fünf soll insbesondere die erhebliche Erniedrigung der Schmelzviskosität verdeutlichen, die durch die Mitverwendung der als Hilfsmonomeren bezeichneten verfahrensgemässen Zusätze e) erzielt wird und somit ein lösungsmittelfreies Arbeiten erlaubt.

Die gemäss der Tabelle 1 zusammengesetzten Polymerisate werden in ausgewählten Mustern, wie beschrieben, in die erfindungsgemässen Leimungungsmittel überführt. Im folgenden entspricht die Polymerisatnummer der Leimungsmittelnummer.

Die Prüfung auf Leimungsmittel in der Oberfläche erfolgt mittels der sogenannten Tintenschwimmprobe: Hierzu wird ein ungeleimtes oder vorgeleimtes Papier mit dem Leimungsmittel behandelt und dann auf flüssige Tinte aufgelegt. Die Zeit, die vergeht, bis die Tinte das Papier von der aufliegenden Unterseite her durchdringt und an der Oberfläche sichtbar wird, ist ein Mass für die Leimungswirkung der untersuchten Substanz. Die Methode liefert insbesondere bei mehrfacher Wiederholung des Einzelversuches zuverlässige Relativbeurteilungen der verschiedenen untersuchten Substanzen. Zweckmässigerweise wird zu Vergleichszwecken ein dem Stande der Technik entsprechendes Leimungsmittel in den Versuchen mitverwendet.

Tabelle 1

| Polymerisat | | Nr. | 0 | 1 | 2 | 3 | 4 | 5 | 6 |
|---|---|---|---|---|---|---|---|---|---|
| Monomeres a): | a: | Tle. | 30 | 30 | 30 | 30 | 30 | 30 | 25 |
| Monomeres e): | a: | Tle. | - | 1,5 | 0,75 | - | - | - | - |
| | b: | Tle. | - | - | - | - | - | 1,5 | - |
| | c: | Tle. | - | - | - | 1,5 | 0,75 | - | 1,5 |
| Monomeres b) | a: | Tle. | 50 | 50 | 50 | 50 | 50 | 50 | 40 |
| | b: | Tle. | - | - | - | - | - | - | - |
| | c: | Tle. | - | - | - | - | - | - | - |
| Monomeres c) | a: | Tle. | 20 | 20 | 20 | 20 | 20 | 20 | 20 |
| Monomeres d) | a: | Tle. | - | - | - | - | - | - | 15 |
| Schmelzviskosität bei 160°C (Pas) | | | $2,85 \cdot 10^3$ | $4,7 \times 10^2$ | $5,5 \cdot 10^2$ | $2,4 \cdot 10^1$ | $1,65 \cdot 10^2$ | $2,2 \cdot 10^2$ | $5,8 \cdot 10^2$ |

Fortsetzung der Tabelle 1

| 7 | 8 | 9 | 10 | 11 | 12 | 13 | 14 | 15 | 16 | 17 |
|---|---|---|---|---|---|---|---|---|---|---|
| 25 | 65 | 30 | 35 | 40 | 30 | 20 | 15 | 60 | 20 | 25 |
| - | - | - | - | - | - | - | - | - | - | - |
| 0,5 | - | - | - | - | - | - | - | - | - | - |
| 1,5 | 3,0 | 2,0 | 1,3 | 1,5 | 1,5 | 1,5 | 0,5 | 3,0 | 1,5 | 1,5 |
| 55 | 25 | - | - | 40 | 50 | 60 | 65 | 20 | 50 | 45 |
| - | - | - | 40 | - | - | - | - | - | - | - |
| - | - | 45 | - | - | - | - | - | - | - | - |
| 15 | 10 | 25 | 25 | 20 | 20 | 20 | 15 | 20 | 30 | 20 |
| 5 | - | - | - | - | - | - | 5 | - | - | 10 |
| $9,4 \cdot 10^1$ | | $2,3 \cdot 10^2$ | $2,8 \cdot 10^2$ | | | | | | | |

Da zunächst im folgenden die Wirkung der Leimungsmittel auf Basis der Ammoniak-Umsetzungsprodukte der Polymerisate beispielhaft verdeutlicht werden soll, wurde das Leimungsmittel A der DE-C-2 304 586 als Vergleich verwendet, bei dem es sich um die ammoniakalische wässrige Lösung eines nachträglich imidierten Lösungs-Copolymerisats aus Maleinsäureester, Styrol und Acrylsäure handelt.

Die Prüfung wurde wie folgt vorgenommen: Es wurde ein Papier mit 75 g/m², hergestellt aus 50 Teilen Nadelholzsulfatzellstoff, 50 Tln. Laubholzzellstoff, 0,12 Tln. eines handelsüblichen Weisstöners, 20 Tln. Talkum, schwach alaunhaltig (pH 5 im Stoffauflauf), eingesetzt.

Aus dem Papier wurden ca. 4 cm² grosse Stükke ausgestanzt und bei 20°C 10 Sek. mit einer 0,5%igen Auflösung der Leimungsmittel in Leitungswasser durch Eintauchen getränkt. Dann wurde zwischen Filtrierpapier abgequetscht, um überschüssige Lösung zu entfernen. Nun wurde bei 120°C im Umluftschrank 4 Min. getrocknet, dann 1 h bei Raumklima konditioniert und auf die Tinte (handelsübliche Füllfeder-Tinte, verdünnt mit dest. Wasser im Verhältnis 1:1), aufgelegt. Alle Proben wurden gleich behandelt und 5fach durchgeführt.

Gemessen wurde als Zeit I die Zeit, die bis zum Durchdringen der ersten Tintenflecken an die Oberfläche vergeht, als Zeit II die Zeit, die vergeht, bis eine etwa 50%ige Durchdringung der Oberfläche erreicht ist. Die gemessenen Zeiten werden in Tabelle 2 als Durchschnittswerte angegeben.

Tintenschwimmprobe
Tabelle 2

| Leimungsmittel Nr. | Zeit I (min.) | Zeit II (min.) |
|---|---|---|
| Vergleich | 8 | 15 |
| 6 | 11 | 25 |
| 17 | 10 | 21 |
| 2 | 8 | 18 |
| 5 | 8 | 19 |
| 3 | 7 | 16 |
| 9 | 7 | 15 |
| 10 | 8 | 13 |
| 14 | 7 | 18 |
| 7 | 6 | 12 |
| 11 | 6 | 11 |
| 12 | 5-6 | 10 |
| 13 | 5-6 | 10 |
| 16 | 5-6 | 9 |

Die Wirkung der Leimungsmittel wurde ausserdem an folgenden Papieren untersucht:

Papier I: Gebleichter Zellstoff
12% Talkum-Asche
1% Alaun
75 g/m².

Papier II: Gebleichter Zellstoff
10% Calciumcarbonat-Asche
(korrigierter CaO-Wert),
80 g/m².

Die Papiere wurden in einer handelsüblichen Laborleimpresse mit einer Flotte folgender Zusammensetzung ausgerüstet:

5% Stärke
0,2% Wirksubstanz der Leimungsmittel,
Rest Wasser,
pH ca. 7,0.

Zum Vergleich wurde wiederum das Leimungsmittel A der DE-C-2 304 586 herangezogen.

Nach dem Trocknen der Papiere auf einem Trockenzylinder bei 100°C wurde 2 Stunden bei Raumtemperatur klimatisiert und anschliessend die Leimungswirkung mit Hilfe der Wasseraufnahme geprüft. Hierzu wurden Abschnitte des Papiers vorgewogen, 1 Min. in Wasser von 20°C getaucht, zwischen Filterpapier mittels eines 10 kg Rollgewichtes einmal abgepresst und zurückgewogen. Aus der Gewichtsdifferenz wurde der Wert für die beidseitige Wasseraufnahme in g/m² errechnet. Je geringer die Wasseraufnahme, desto besser die Leimungswirkung. Eine gute Leimung liegt vor, wenn eine Wasseraufnahme von ca. 40 g/m² und niedriger erreicht wird.

Die Messwerte sind in Tabelle 3 zusammengestellt.

Tabelle 3

| Leimungsmittel nach Beispiel Nr. | Wasseraufnahme, g/m² Papier I | Papier II |
|---|---|---|
| Vergleich | 30 | 41 |
| 6 | 24 | 33 |
| 17 | 28 | 36 |
| 2 | 30 | 42 |
| 5 | 30 | 44 |

In den nachfolgenden Beispielen werden folgende Polymerisate und daraus hergestellte Leimungsmittelzubereitungen eingesetzt:

Polymerisat 18

In einem Polymerisationsgefäss mit Rührer und Rückflusskühler werden vorgelegt: 275 Tle Butylacrylat, 100 Tle. Maleinhydrid und 1,6 Tle. Enolether c (Monomertyp e).

Man erhitzt auf 170°C und lässt beim Sieden in 30 Min. folgendes Polymerisationsgemisch einlaufen: 125 Tle. Styrol, 0,4 Tle des Enolethers c wie oben, 0,5 Tle. t-Butylperoctoat, 0,5 Tle. t-Butylhydroperoxid und 0,2 Tle. Dicumylperoxid.

Man rührt 3 Stunden bei 170°C nach.

Leimungsmittel 18

300 Tle. Schmelze des Polymerisats 18 werden bei 120°C unter Rühren mit einer auf ca. 50°C vorgewärmten Lösung von 250 Tlen. ca. 25%igen wässrigen Ammoniaks in 1500 Tlen Wasser versetzt und unter Abkühlung gerührt, bis der Gefässinhalt sich zu einer homogenen Dispersion umgewandelt hat. Diese Dispersion hat einen Feststoffgehalt von ca. 15%. Sie kann ohne Verlust an Leimungswirkung noch mit 100 Tlen Harnstoff versetzt werden, wodurch ihre Fliessfähigkeit verbessert wird. Da diese im vorliegenden Falle jedoch voll ausreichend ist, wird bei der beispielhaft durchgeführten Leimungsprüfung das harnstoffreie Material eingesetzt.

Polymerisat 19

In einem Polymerisationsgefäss wie oben werden vorgelegt: 250 Tle Acrylsäurebutylester, 25 Tle Acrylnitril und 100 Tle Maleinanhydrid sowie 1,6 Tle Enolether c wie oben.

Man erhitzt zum Sieden und lässt unter Steigerung der Temperatur auf 170°C in 30 Min. folgendes Gemisch einlaufen: 125 Tle Styrol, 0,4 Tle Enolether c wie oben, 0,5 Tle t-Butylperoctoat, 0,5 Tle t-Butylhydroperoxid und 0,2 Tle Dicumylperoxid.

Man rührt noch 3 Stunden bei 170°C nach und granuliert dann nach Abkühlen der Schmelze.

Leimungsmittel 19

30 Tle Granulat aus Polymerisat 19 werden bei Raumtemperatur in einer Mischung aus 25 Tlen ca. 25%igen Ammoniak und 150 Tlen Wasser zu einer ca. 14%igen wässrigen Dispersion unter Rühren aufgelöst. Diese Zubereitung ist sofort verwendbar.

Polymerisat 20

In einem Polymerisationsgefäss wie oben werden 20 Tle einer Polymerisationsmischung folgender Zusammensetzung vorgelegt: 25 Tle Styrol, 45 Tle Butylacrylat, 10 Tle Acrylnitril, 20 Tle Maleinanhydrid, 1,5 Tle Enolether c wie oben, 0,1 Tl t-Butylperoctoat, 0,1 Tl t-Butylhydroperoxid und 0,05 Tle Dicumylperoxid.

Man erhitzt zum Sieden und steigert die Temperatur auf 170°C, während man im Laufe von 30 Min. den Rest der Mischung in das Reaktionsgefäss gleichmässig einträgt.

Dann rührt man bei 170°C nach, lässt die gebildete Polymerisationsschmelze ab und granuliert sie.

Leimungsmittel 20

30 Tle des gepulverten Granulats aus Polymerisat 20 werden in einer Mischung aus 25 Tlen ca. 25%igen wässrigen Ammoniaks und 150 Tlen Wasser zu einer feinteiligen Dispersion bei Raumtemperatur aufgelöst. Die so erhältliche ca. 15%ige Dispersion wird zu Leimungszwecken eingesetzt.

Zur Prüfung der Leimungswirkung der Polymerisate 18, 19 und 20 wurden folgende Papiere verwendet:

Papier I
50% Nadelholzsulfatzellstoff, gebleicht, Mahlgrad 35° SR;
50% Laubholzsulfatzellstoff, gebleicht, Mahlgrad 35° SR;
pH im Stoffauflauf 7,5; 8,7% Kaolinasche.

Papier II
50% Nadelholzsulfatzellstoff, gebleicht, Mahlgrad 28° SR;
50% Laubholzsulfatzellstoff, gebleicht, Mahlgrad 28° SR;
ca. 7% Kreide-Asche.

Papier III
50% Nadelholzsulfatzellstoff, gebleicht, Mahlgrad 35° SR;
50% Laubholzsulfatzellstoff, gebleicht, Mahlgrad 35° SR;
0,2% Harzleim (bez. auf Zellstoff)
0,5% Alaun (bez. auf Zellstof)
bei 3%iger Stoffdichte pH 5,5
ca. 12% China-Clay-Asche.

Die Papiere wurden auf einer Laborleimpresse der Firma Mathis mit 4 m/Min. bei 50% Anpressdruck mit einer Leimflotte ausgerüstet, die neben Wasser die angegebene Menge Leimungsmittel sowie 5% niedrigviskose oxidierte Kartoffelstärke enthielt. Anschliessend wurde ca. 150 Sek. bei 100°C getrocknet.

Die Papiere haben ein Flächengewicht von ca. 80 g/m².

Die zur Beurteilung der Leimung verwendete Tintenschwimmprobe wird wie folgt durchgeführt:

Die Papiere werden als Streifen von 2×8 cm auf Prüftinte nach DIN 53126 gelegt und der Tintendurchschlag nach der angegebenen Prüfzeit visuell wie folgt beurteilt:

1 = kein Durchschlagen
2 = geringer Durchschlag bis zu ca. 5% der Fläche
3 = deutlicher Durchschlag, ca. 5–15% der Fläche
4 = etwa 50%iger Durchschlag
5 = völliger Durchschlag.

Eine andere Prüfmethode ist die Bestimmung der Wasseraufnahme auf folgende Weise:

Die lufttrocken ausgewogenen Prüfstreifen des Papiers werden 1 Minute in Wasser bei 20°C getaucht, dann zwischen Filterpapier abgepresst und gewogen. Die Gewichtszunahme wird als Wasseraufnahme in Gramm pro m² Papier angegeben. Gute Papiere haben geringe Wasseraufnahmewerte.

In den folgenden tabellarischen Aufstellungen sind die Benotungen der Tintenschwimmproben (TSP) und die Wasseraufnahme (WA) in g/m² bei pH-Werten von ca. 9,5 und ca. 6,0 der Leimflotte aufgeführt:

Leimungswerte auf Papier I

| Leimungsmittel (LM) | pH | LM-Konz. (%) | TSP (6 Min.) | WA |
|---|---|---|---|---|
| Vergleich | 9,5 | 0,2 | 4 | 46,0 |
| | 6,0 | 0,2 | 5 | 70,0 |
| | 9,5 | 0,4 | 1,5 | 34,2 |
| | 6,0 | 0,4 | 5 | 64,0 |
| LM 18 | 9,5 | 0,2 | 3 | 34,0 |
| | 6,0 | 0,2 | 3 | 33,8 |
| | 9,5 | 0,4 | 1,5 | 31,9 |
| | 6,0 | 0,4 | 1,5 | 30,0 |
| LM 19 | 9,5 | 0,2 | 4,5 | 37,0 |
| | 6,0 | 0,2 | 4,5 | 32,8 |
| | 9,5 | 0,4 | 3,5 | 33,5 |
| | 6,0 | 0,4 | 3,5 | 33,0 |
| LM 20 | 9,5 | 0,2 | 4,5 | 38,2 |
| | 6,0 | 0,2 | 4,5 | 39,2 |
| | 9,5 | 0,4 | 3 | 34,0 |
| | 6,0 | 0,4 | 3 | 33,6 |
| Leimungswerte auf Papier II | | | | |
| Vergleich | 9,5 | 0,2 | 5 | 70,0 |
| | 6,0 | 0,2 | 5 | 81,0 |
| | 9,5 | 0,4 | 4 | 49,0 |
| | 6,0 | 0,4 | 5 | 75,0 |
| LM 18 | 9,5 | 0,2 | 1 | 42,0 |
| | 6,0 | 0,2 | 1 | 42,2 |
| | 9,5 | 0,4 | 1 | 38,7 |
| | 6,0 | 0,4 | 1 | 36,6 |
| LM 19 | 9,5 | 0,2 | 1 | 42,6 |
| | 6,0 | 0,2 | 1 | 41,1 |
| | 9,5 | 0,4 | 1 | 40,9 |
| | 6,0 | 0,4 | 1 | 39,0 |
| LM 20 | 9,5 | 0,2 | 1,5 | 46,0 |
| | 6,0 | 0,2 | 2 | 45,5 |
| | 9,5 | 0,4 | 1 | 41,0 |
| | 6,0 | 0,4 | 1 | 38,4 |

Leimungswerte auf Papier III

| Leimungs-mittel (LM) | pH | LM-Konz. (%) | TSP (6 Min.) | WA |
|---|---|---|---|---|
| Vergleich | 9,5 | 0,2 | 2 | 39,8 |
| | 6,0 | 0,2 | 5 | 63,0 |
| | 9,5 | 0,4 | 1 | 33,6 |
| | 6,0 | 0,4 | 5 | 59,0 |
| LM 18 | 9,5 | 0,2 | 1 | 32,9 |
| | 6,0 | 0,2 | 1 | 31,2 |
| | 9,5 | 0,4 | 1 | 30,1 |
| | 6,0 | 0,4 | 1 | 30,5 |
| LM 19 | 9,5 | 0,2 | 1,5 | 33,1 |
| | 6,0 | 0,2 | 1,5 | 31,4 |
| | 9,5 | 0,4 | 1 | 31,2 |
| | 6,0 | 0,4 | 1,5 | 29,8 |
| LM 20 | 9,5 | 0,2 | 1,5 | 32,2 |
| | 6,0 | 0,2 | 1,5 | 35,4 |
| | 9,5 | 0,4 | 1 | 31,6 |
| | 6,0 | 0,4 | 1,5 | 32,0 |

Die aufgeführten gefundenen Prüfwerte zeigen die Überlegenheit der verfahrensgemässen Leimungsmittel, insbesonders auf kreidehaltigem Papier. Von besonderem Interesse ist auch die bei allen Papieren deutlich erkennbare gute pH-Stabilität der neuen Leimungsmittel.

Für die Leimungsmittel auf Basis der Umsetzungsprodukte mit Diamin und Epichlorhydrin sind die Beispiele zur Herstellung der Polymerisate in Tabelle 4, die Beispiele zur Umsetzung mit Diamin und Epichlorhydrin in Tabelle 5 zusammengefasst.

Die gemäss der Tabelle 4 zusammengesetzten Polymerisate werden in ausgewählten Mustern wie beschrieben gemäss Tabelle 5 in die erfindungsgemässen Leimungsmittel überführt. Im folgenden entspricht die Polymerisationsnummer der Leimungsmittelnummer.

Die Prüfung auf Leimungswirkung in der Oberfläche erfolgt, wie bereits beschrieben, durch die sogenannte Tintenschwimmprobe. Die gemessenen Zeiten werden in Tabelle 6 als Durchschnittswerte angegeben.

Zum Vergleich wurde das Leimungsmittel 1 der DE-B-1 621 688 verwenddet, das ausgezeichnete Wirksamkeit besitzt und aus einer Dispersion eines Butylacrylat-Acrylnitril-Copolymerisats und des essigsauren Salzes des Umsetzungsproduktes eines Styrol-Maleinsäureanhydrid-Copolymerisats mit 1-Dimethylaminopropylamin-3 und Cyclohexylamin besteht.

Tabelle 4

| Polymerisat | | Nr. | 0 | 21 | 22 | 23 | 24 | 25 | 26 |
|---|---|---|---|---|---|---|---|---|---|
| Monomeres a) | a: | Tle. | 30 | 30 | 30 | 30 | 30 | 30 | 60 |
| Monomeres e) | a: | Tle. | – | 1,5 | 0,75 | – | – | – | – |
| | b: | Tle | – | – | – | – | – | 1,5 | – |
| | c: | Tle. | – | – | – | 1,5 | 0,75 | – | 3 |
| Monomeres b) | a: | Tle. | 50 | 50 | 50 | 50 | 50 | 50 | 10 |
| | b: | Tle. | – | – | – | – | – | – | – |
| | c: | Tle. | – | – | – | – | – | – | – |
| Monomeres c) | a: | Tle. | 20 | 20 | 20 | 20 | 20 | 20 | 30 |
| Monomeres d) | a: | Tle. | – | – | – | – | – | – | – |
| Schmelzviskosität bei 160°C (Pas) | | | 2,85·10³ | 4,7·10² | 5,5·10² | 2,4·10² | 1,65·10² | 2,210² | 4,5·10² |

Tabelle 4 (Fortsetzung)

| 27 | 28 | 29 | 30 | 31 | 32 | 33 | 34 | 35 |
|---|---|---|---|---|---|---|---|---|
| 50 | 45 | 35 | 25 | 40 | 30 | 20 | 20 | 35 |
| – | – | – | – | – | – | – | – | – |
| 0,5 | – | – | – | – | – | – | – | – |
| 1,5 | 1,5 | 1,5 | 1,5 | 1,5 | 1,5 | 1,5 | 1,0 | 1,8 |
| 30 | 45 | 55 | 65 | 40 | 50 | 60 | – | – |
| – | – | – | – | – | – | – | 55 | – |
| – | – | – | – | – | – | – | – | 40 |
| 20 | 10 | 10 | 10 | 20 | 20 | 20 | 15 | 20 |
| – | – | – | – | – | – | – | 10 | 5 |
| | | | | | | | 3,1·10² | |

Tabelle 5

| Leimungsmittel Nr. | 26 | 27 | 28 | 29 | 30 | 31 | 32 | 33 | 34 | 35 |
|---|---|---|---|---|---|---|---|---|---|---|
| Polymerisat Nr. | 6 | 7 | 8 | 9 | 10 | 11 | 12 | 14 | 14 | 15 |
| Amin Tle. | 34 | 22,8 | 11,4 | 11,4 | 11,4 | 22,8 | 22,8 | 28,5 | 22,8 | |
| Aceton | + | + | – | – | – | – | – | – | + | – |
| Isopropanol | – | – | + | + | + | + | + | + | – | + |
| 50%ige Lösung Tle. | 50 | 50 | 50 | 50 | 50 | 50 | 50 | 50 | 50 | 50 |
| Wasserzusatz Tle. | 5 | 5 | 10 | 10 | 10 | 10 | 10 | 10 | 8 | 5 |
| Epichlorhydrin Tle. | 5,4 | 3,5 | 1,8 | 1,8 | 1,8 | 3,5 | 3,5 | 3,5 | 2,7 | 2,0 |
| Wasserzusatz Tle. (Verdünnung) | 120 | 120 | 115 | 115 | 115 | 115 | 115 | 115 | 113 | 120 |
| Essigsäure | 4,5 | 2,5 | 1,5 | 1,5 | 1,5 | 2,5 | 2,5 | 2,5 | 2,0 | 2,0 |
| Dispersion | – | – | + | + | – | – | – | – | + | – |
| Lösung | + | + | – | – | + | + | + | + | – | + |

Tabelle 6
Tintenschwimmprobe

| Leimungsmittel Nr. | Zeit I (Min.) | Zeit II (Min.) |
|---|---|---|
| Vergleich | 25 | 65 |
| 26 | 20 | 80 |
| 27 | 30 | 60 |
| 28 | 18 | 52 |
| 30 | 16 | 50 |
| 32 | 28 | 58 |
| 35 | 29 | 48 |

Die erhaltenen Werte liegen im technisch geforderten Bereich.

Die Wirkung der Leimungsmittel wurde ausserdem an folgenden Papieren untersucht:

Papier I: Gebleichter Zellstoff
12% Talkum-Asche
1% Alaun
75 g/m².

Papier II: Gebleichter Zellstoff
10% Calciumcarbonat-Asche (korrigierter CaO-Wert),
80 g/m².

Die Papiere wurden in einer handelsüblichen Laborleimpresse mit einer Flotte folgender Zusammensetzung ausgerüstet:

5% Stärke
0,35% Wirksubstanz der Leimungsmittel,
Rest Wasser,
pH ca. 7,0.

Zum Vergleich wurde wiederum das Leimungsmittel 1 der DE-B-1 621 688 herangezogen.

Nach dem Trocknen der Papiere auf einem Trockenzylinder bei 100°C wurde 2 Stunden bei Raumtemperatur klimatisiert und anschliessend die Leimungswirkung mit Hilfe der Wasseraufnahme geprüft. Hierzu wurden Abschnitte des Papiers vorgewogen, 1 Min. in Wasser von 20°C getaucht, zwischen Filterpapier mittels eines 10 kg Rollgewichtes einmal abgepresst und zurückgewogen. Aus der Gewichtsdifferenz wurde der Wert für die beidseitige Wasseraufnahme in g/m² errechnet. Je geringer die Wasseraufnahme, desto besser ist die Leimungswirkung. Eine gute Leimung liegt vor, wenn eine Wasseraufnahme von ca. 40 g/m² und niedriger erreicht wird.

Die Messwerte sind in Tabelle 7 zusammengestellt.

Tabelle 7

| Leimungsmittel Nr. | Wasseraufnahme, g/m² Papier I | Papier II |
|---|---|---|
| Vergleich | 30 | 41 |
| 29 | 49 | 49 |
| 31 | 29 | 40 |
| 33 | 48 | 45 |
| 34 | 32 | 39 |

Die erhaltenen Werte liegen im technisch üblichen Bereich.

Zur Prüfung der Leimungswirkung bei Zusatz zur Papiermasse wurden auf einem Laborblattbildner Papierblätter aus gebleichtem Sulfitzellstoff hergestellt:

In 200 ml Leitungswasser werden 5 g einer Mischung aus 50 g Fichten-Sulfitzellstoff, 50 g Buchen-Sulfatzellstoff und 25 g Kreide aufgeschlämmt. Dann werden 0,8% des Leimungsmittels (Feststoff bezogen auf Zellstoff plus Füllstoff) hinzugerührt. Dann wird ohne Zusatz eines Fixiermittels mit Wasser auf ca. 1 Liter aufgefüllt und auf einem Blattbildner das Papierblatt hergestellt. Dieses wird abgesaugt, abgepresst und auf einem Trockenzylinder bei 120°C 5 Min. getrocknet. Aus dem Blatt werden für die Tintenschwimmprobe Streifen (2 cm×6 cm) geschnitten und ausgeprüft.

Nach 2stündigem Klimatisieren der Papiere bei Raumtemperatur wurde die Leimung mittels Tintenschwimmprobe geprüft. Verwendet wurde handelsübliche Füllfedertinte (unverdünnt), zum Vergleich wurde wiederum das Leimungsmittel 1 der DE-B-1 621 688 herangezogen. Die Messwerte sind in Tabelle 8 zusammengestellt.

Tabelle 8
Tintenschwimmprobe nach Masseleimung

| | (1% Zusatz) |
|---|---|
| Vergleich | über 20 Min. |
| 26 | über 20 Min. |
| 27 | über 20 Min. |
| 31 | über 20 Min. |
| 32 | über 20 Min. |

An den bei pH 7 hergestellten, mit Leimungsmittel 32 ausgerüsteten Papierproben wurde eine Wasseraufnahme (g/m²) von 33 gemessen. Bei pH 5,5 findet man den Wert von 32, bei pH 8,5 den Wert von 32.

Setzt man bei der Herstellung des Papieres noch weitere verschiedenartige übliche Papierhilfsmittel zu, so werden die Wasseraufnahmewerte nur unwesentlich verändert (vgl. Tabelle 9):

Tabelle 9

| Zusatz in % | Wasseraufnahme, g/m² |
|---|---|
| 2 Alaun | 34 |
| 2 Carboxymethylcellulose | 31 |
| 2 kationische Stärke | 37 |
| 1 kation. Polymer (Nadavin LT) | 34 |
| 1 kation. Retentionsmittel | |
| Retaminol E | 32 |
| Retaminol K | 32 |

Hier zeigt sich die grosse Toleranzbreite der erzielbaren Leimung.

In den anschliessenden Beispielen wurde folgende Zubereitung für die Herstellung der Prüfpapiere verwendet:

Stoff R

50 Teile gebleichter Birkensulfatzellstoff und 50 Teile gebleichter Kiefernsulfatzellstoff werden bei 2,5% Stoffdichte im Holländer auf 35–40° SR (Mahlgrad) vermahlen. Dann wird mit Wasser auf eine Gesamtstoffkonzentration von 1,7% verdünnt und diese Zubereitung, gegebenenfalls nach Hilfsmittelzusatz, zu den Papieren weiterverarbeitet.

Die Papiere haben ein Flächengewicht von ca. 80 g/m².

Die zur Beurteilung der Leimung verwendete Tintenschwimmprobe wird wie folgt durchgeführt:

Die Papiere werden als Streifen von 2×8 cm auf Prüftinte nach DIN 51326 gelegt und der Tintendurchschlag nach der angegebenen Prüfzeit visuell wie folgt beurteilt:

1: kein Durchschlagen
2: geringer Durchschlag bis zu ca. 5% der Fläche
3: deutlicher Durchschlag, ca. 5–15% der Fläche
4: etwa 50%iger Durchschlag
5: völliger Durchschlag.

Eine andere Prüfmethode ist die Bestimmung der Wasseraufnahme auf folgende Weise:

Die lufttrocken ausgewogenen Prüfstreifen des Papieres werden 1 Minute in Wasser bei 20°C getaucht, dann zwischen Filterpapier abgepresst und gewogen. Die Gewichtszunahme wird als Wasseraufnahme in Gramm pro m² Papier angegeben. Gute Papiere haben geringe Wasseraufnahmewerte.

Polymerisat 36

In einem Reaktionsgefäss mit Rührer und Rückflusskühler legt man vor ein Gemisch aus: 225 Teile Butylacrylat; 50 Teile Acrylnitril; 100 Teile Maleinanhydrid und 6 Teile Enolether c (Monomertyp e). Dann erhitzt man auf 170°C und trägt in ca. 30 Minuten eine wie folgt zusammengesetzte Mischung ein: 125 Teile Styrol; 1,5 Teile Enolether c wie oben; 0,5 Teile t-Butylperoctoat; 0,5 Teile t-Butylhydroperoxid und 0,2 Teile Dicumylperoxid. Unter weiterem Rühren bei 170°C lässt man 3 h auspolymerisieren. Dann setzt man 125 Teile 1-Amino-3-dimethyl-aminopropan hinzu und lässt 3 h bei 170°C nachreagieren. Dann senkt man die Temperatur unter Rühren auf 100–120°C, setzt 25 Teile Essigsäure hinzu und versetzt mit 1650 Teilen auf ca. 80°C vorgewärmten Wassers. Es bildet sich eine ca. 25%ige Dispersion, die nach Abkühlung auf einen Feststoffgehalt von ca. 15% eingestellt wird.

Leimungsmittel 36

100 Teile der wie oben beschrieben hergestellten Dispersion werden mit 5 Teilen Epichlorhydrin versetzt und unter Erwärmung auf 60°C 2 h gerührt. Nach Eindampfprobe bei 120°C wird ein Feststoffgehalt von ca. 20% gefunden.

Das Leimungsmittel 36, sowie das Vergleichsmaterial werden dem Stoff R vor der Blattbildung in angegebener Menge zugesetzt und nach gutem Durchrühren anschliessend das Papier hergestellt. Man trocknet ca. 150 Sekunden bei 100°C, das Gewicht liegt bei 80 g/m².

Prüfergebnisse:

| | Einsatz (%) | Wasseraufnahme (g/m²) | Tintenschwimmprobe (10 Min.) |
|---|---|---|---|
| Leimungsmittel 36 | 0,4 | 97 | 3 |
| | 0,45 | 95 | 1 |
| | 0,5 | 87 | 1 |
| | 0,6 | 71 | 1 |
| Vergleich | 0,7 | 97 | 3 |
| | 1,0 | 60 | 1 |

Man erkennt, dass das erfindungsgemässe Leimungsmittel gegenüber dem Vergleich in bezug auf Wasseraufnahme und Tintenschwimmprobe etwa doppelt so wirksam ist.

Polymerisat 37

In einem Polymerisationsgefäss mit Rührer und Rückflusskühler werden 150 Teile der folgenden Polymerisationsmischung vorgelegt und auf 170°C erhitzt: 250 Teile Styrol; 50 Teile Butylacrylat; 50 Teile Acrylnitril; 200 Teile Maleinanhydrid; 15 Teile Enolether c wie oben; 1 Teil t-Butylperoctoat; 1 Teil t-Butylhydroperoxid; 0,4 Teile Dicumylperoxid.

Dann wird der Rest des Reaktionsgemisches im Laufe von 30 Minuten gleichmässig in das Reaktionsgefäss eingetragen. Man lässt 2 h bei 170°C nachpolymerisieren. Dann werden 250 Teile 1-Amino-3-Dimethylaminopropan hinzugefügt. Anschliessend lässt man noch 3 h bei 170°C durchreagieren. Die Polymerisatschmelze wird ausgetragen und nach Abkühlung granuliert.

Polymerisat 38

In einem Reaktionsgefäss wie oben legt man vor: 225 Teile Butylacrylat; 75 Teile Acrylnitril; 50 Teile Maleinanhydrid und 6 Teile Enolether c wie oben. Dann erhitzt man auf 170°C und fügt im Laufe von 30 Minuten folgendes Gemisch hinzu:

150 Teile Styrol; 1,5 Teile Enolether c wie oben; 0,5 Teile t-Butylperoctoat; 0,5 Teile t-Butylhydroperoxid; 0,2 Teile Dicumylperoxid. Man lässt 3 h polymerisieren. Dann wird die gebildete Polymerisatschmelze mit 63 Teilen 1-Amino-3-Dimethylaminopropan versetzt und die Reaktionsmischung unter weiterem Rühren 3 h bei 170°C gehalten. Anschliessend wird die Polymerisatschmelze abgekühlt und granuliert.

Polymerisat 39

In einem Polymerisationsgefäss wie oben legt man vor: 250 Teile Butylacrylat; 50 Teile Acrylnitril; 75 Teile Maleinanhydrid und 6 Teile Enolether c wie oben. Man erhitzt auf 170°C und fügt innerhalb 30 Minuten gleichmässig folgendes Gemisch hinzu:

125 Teile Styrol; 1,5 Teile Enolether c wie oben; 0,5 Teile t-Butylperoctoat; 0,5 Teile Butylhydroperoxid und 0,2 Teile Dicumylperoxid. Man lässt 3h nachpolymerisieren und fügt dann 75 Teile 1-Amino-3-Dimethylaminopropan hinzu. Nach weiteren 3h Reaktionszeit wird die gebildete Polymerisatschmelze abgelassen und granuliert.

Leimungsmittel 37

25 Teile Polymerisat 17 werden in 25 Teilen Aceton gelöst, dann setzt man 3,5 Teile Epichlorhydrin hinzu sowie 10 Teile Wasser. Man lässt 1 h bei 20°C rühren, dann fügt man 3,5 Teile Essigsäure hinzu und lässt weiter 30 Minuten rühren; dann wird mit 115 Teilen Wasser verdünnt. Der bei 120°C durch Abdampfprobe bestimmte Festgehalt liegt bei ca. 17%.

Leimungsmittel 38

Es wird analog Leimungsmittel 37 gearbeitet, jedoch nur eine Epichlorhydrinmenge von 1,8 Teilen eingesetzt. Der Feststoffgehalt beträgt ca. 15%.

Leimungsmittel 39

Es wird analog Leimungsmittel 37 gearbeitet, jedoch eine Epichlorhydrinmenge von 3,1 Teilen verwendet. Der Feststoffgehalt beträgt ca. 16%.

Die Leimungsmittel 37–39 werden wie folgt als Oberflächenleimungsmittel geprüft:

Ein Rohpapier aus gleichen Teilen Nadel- und Laubholzzellstoff mit einem Flächengewicht von 75 g/m², einem pH von 7,5 im Stoffauflauf und 9% Kaolinasche wird in einer Laborleimpresse Typ HF der Firma Mathis bei ca. 80% Flottenaufnahme, bezogen auf Papiergewicht, ausgerüstet. Die Flotte enthält ausser Wasser 0,2% Leimungsmittelfeststoff und 5% niedrigviskose, oxidativ abgebaute Kartoffelstärke. Sodann wird bei 100°C getrocknet, Trockenzeit ca. 200 Sekunden.

Nach der vorstehend beschriebenen Methode werden Wasseraufnahme (WA) und Beständigkeit gegen Tinte durch Tintenschwimmprobe (TSP) festgestellt:

| | WA (g/m²) | pH 5–6 TSP (Minuten bis Durchschlag) | WA (g/m²) | pH 8,5 TSP (Minuten bis Durchschlag) |
|---|---|---|---|---|
| Leimungsmittel 37 | 36 | 20 | 37 | 20 |
| Leimungsmittel 38 | 39 | 15 | 39 | 15 |
| Leimungsmittel 39 | 38 | 12 | 42 | 10 |
| Vergleich | 36 | 10 | 61 | 1 |

Man erkennt die gute Wirksamkeit der erfindungsgemässen Leimungsmittel, auch deren pH-stabile Wirksamkeit.

Für die Leimungsmittel auf Basis der Umsetzungsprodukte mit Diamin und Säure sind die Beispiele zur Herstellung der Polymerisate in Tabelle 10, die Beispiele zur Umsetzung mit Diamin und Säure in Tabelle 11 zusammengefasst.

Die gemäss Tabelle 10 zusammengesetzten Polymerisate werden in ausgewählten Mustern, wie

beschrieben, gemäss Tabelle 11 in die erfindungsgemässen Leimungsmittel überführt. Im folgenden entspricht die Polymerisatnummer der Leimungsmittelnummer.

Die Prüfung auf Leimungswirkung in der Oberfläche erfolgt, wie bereits beschrieben, durch die sogenannte Tintenschwimmprobe. Die gemessenen Zeiten werden in Tabelle 12 als Durchschnittswerte angegeben. Zum Vergleich wurde wieder das Leimungsmittel 1 der DE-B-1 621 688 verwendet.

Tabelle 10

| Polymerisat | | Nr. | 0 | 40 | 41 | 42 | 43 | 44 |
|---|---|---|---|---|---|---|---|---|
| Monomeres a) | a: | Tle. | 30 | 30 | 40 | 30 | 40 | 40 |
| Monomeres e) | a: | Tle. | - | 1,5 | 0,75 | - | - | - |
| | b: | Tle. | - | - | - | - | - | 1,5 |
| | c: | Tle. | - | - | - | 1,5 | 0,75 | - |
| Monomeres b) | a: | Tle. | 50 | 50 | 50 | 50 | 52 | 50 |
| | b: | Tle. | - | - | - | - | - | - |
| | c: | Tle. | - | - | - | - | - | - |
| Monomeres c) | a: | Tle. | 20 | 20 | 10 | 20 | 8 | 10 |
| Monomeres d) | a: | Tle. | - | - | - | - | - | - |
| Schmelzviskosität bei 160°C (Pas) | | | $2,85 \cdot 10^3$ | $4,7 \cdot 10^2$ | $4,5 \cdot 10^2$ | $2,4 \cdot 10^1$ | $1,4 \cdot 10^2$ | $2,0 \cdot 10^2$ |

Fortsetzung Tabelle 10

| 45 | 46 | 47 | 48 | 49 | 50 | 51 | 52 |
|---|---|---|---|---|---|---|---|
| 60 | 55 | 45 | 35 | 30 | 30 | 40 | 40 |
| - | - | - | - | - | - | - | - |
| 0,5 | - | - | - | - | - | - | - |
| 1,5 | 1,5 | 1,5 | 1,5 | 1,5 | 1,5 | 1,0 | 1,0 |
| 30 | 35 | 45 | 55 | 45 | 50 | 20 | 20 |
| - | - | - | - | - | - | 28 | - |
| - | - | - | - | - | - | - | 28 |
| 10 | 10 | 10 | 10 | 10 | 10 | 12 | 12 |
| - | - | - | - | 15 | 10 | - | - |
| | | | | $5,0 \cdot 10^2$ | $1,1 \cdot 10^2$ | | |

Tabelle 11

| Leimungsmittel Nr. | 43 | 45 | 46 | 47 | 48 | 49 | 50 | 51 | 52 |
|---|---|---|---|---|---|---|---|---|---|
| Polymerisat Nr. | 43 | 45 | 46 | 47 | 48 | 49 | 50 | 51 | 52 |
| Amin Tle. | 9,7 | 11,4 | 11,4 | 11,4 | 11,4 | 11,4 | 11,4 | 13,9 | 13,9 |
| Aceton | - | + | - | + | + | - | - | - | - |
| Isopropanol | + | - | + | - | - | + | + | + | - |
| 50%ige Lösung Tle. | 50 | 50 | 50 | 50 | 50 | 50 | 50 | 50 | 50 |
| Essigsäure | 4,5 | 4,8 | 4,5 | 4,5 | 4,5 | 4,5 | 4,5 | 5,7 | 5,7 |
| Wasserzusatz Tle. (Verdünnung) | 110 | 110 | 110 | 110 | 110 | 110 | 110 | 110 | 110 |
| Dispersion | + | + | + | - | +- | - | +- | + | + |
| Lösung | - | - | - | + | -+ | + | -+ | - | - |

Tabelle 12
Tintenschwimmprobe

| Leimungsmittel Nr. | Zeit I (Min.) | Zeit II (Min.) |
|---|---|---|
| Vergleich | 80 | 80 |
| 4 | | 100 |
| 6 | | 95 |
| 7 | 85 | 105 |
| 8 | | 90 |
| 9 | | 115 |

Tabelle 12 (Fortsetzung)
Tintenschwimmprobe

| Leimungsmittel Nr. | Zeit I (Min.) | Zeit II (Min.) |
|---|---|---|
| 10 | 85 | 95 |
| 11 | 80 | 100 |
| 12 | 60 | 85 |
| 13 | 60 | 80 |

Die Wirkung der Leimungsmittel wurde ausserdem an folgenden Papieren untersucht:

Papier I: Gebleichter Zellstoff
12% Talkum-Asche
1% Alaun
75 g/m².

Papier II: Gebleichter Zellstoff
10% Calciumcarbonat-Asche (korrigierter CaO-Wert),
80 g/m².

Die Papiere wurden in einer handelsüblichen Laborleimpresse mit einer Flotte folgender Zusammensetzung ausgerüstet:

5% Stärke
0,5% Wirksubstanz der Leimungsmittel,
Rest Wasser,
pH ca. 7,0.

Zum Vergleich wurde wiederum das Leimungsmittel 1 der DE-B-1 621 688 herangezogen.

Nach dem Trocknen der Papiere auf einem Trockenzylinder bei 100°C wurde 2 Stunden bei Raumtemperatur klimatisiert und anschliessend die Leimungswirkung mit Hilfe der Wasseraufnahme geprüft. Hierzu wurden Abschnitte des Papiers vorgewogen, 1 Min. in Wasser von 20°C getaucht, zwischen Filterpapier mittels eines 10 kg Rollgewichtes einmal abgepresst und zurückgewogen. Aus der Gewichtsdifferenz wurde der Wert für die beidseitige Wasseraufnahme in g/m² errechnet. Je geringer die Wasseraufnahme, desto besser ist die Leimungswirkung. Eine gute Leimung liegt vor, wenn eine Wasseraufnahme von ca. 40 g/m² und niedriger erreicht wird.

Die Messwerte sind in Tabelle 13 zusammengestellt.

Tabelle 13

| Leimungsmittel Nr. | Wasseraufnahme, g/m² Papier I | Papier II |
|---|---|---|
| Vergleich | 30 | 44 |
| 46 | 22 | 30 |
| 48 | 26 | 40 |
| 49 | 20 | 32 |
| 50 | 22 | 31 |

Zur Prüfung der Leimungswirkung bei Zusatz zur Papiermasse wurden auf einem Laborblattbildner Papierblätter aus gebleichtem Sulfatzellstoff hergestellt:

In 200 ml Leitungswasser werden 5 g einer Mischung aus 50 g Fichten-Sulfatzellstoff, 50 g Buchen-Sulfatzellstoff und 25 g Kreide aufgeschlämmt. Dann werden 1% des Leimungsmittels (Feststoff bezogen auf Zellstoff plus Füllstoff) hinzugerührt. Dann wird ohne Zusatz eines Fixiermittels mit Wasser auf ca. 1 Liter aufgefüllt und auf einem Blattbildner das Papierblatt hergestellt. Dieses wird abgesaugt, abgepresst und auf einem Trockenzylinder bei 120°C 5 Min. getrocknet. Aus dem Blatt werden für die Tintenschwimmprobe Streifen (2×6 cm) geschnitten und ausgeprüft.

Nach 2stündigem Klimatisieren der Papiere bei Raumtemperatur wurde die Leimung mittels Tintenschwimmprobe geprüft. Verwendet wurde handelsübliche Füllfedertinte (unverdünnt). Zum Vergleich wurde wiederum das Leimungsmittel 1 der DE-B-1 621 688 herangezogen. Die Messwerte sind in Tabelle 14 zusammengestellt.

Tabelle 14

| | Tintenschwimmprobe nach Masseleimung (1% Zusatz) |
|---|---|
| Vergleich | über 20 Min. |
| 46 | über 20 Min. |
| 48 | über 20 Min. |
| 49 | über 20 Min. |
| 50 | über 20 Min. |

In den anschliessenden Beispielen wurde folgende Zubereitung für die Herstellung der Prüfpapiere verwendet:

Stoff R

50 Tle gebleichter Birkensulfatzellstoff und 50 Tle gebleichter Kiefernsulfatzellstoff werden bei 2,5% Stoffdichte im Holländer auf 35–40° SR (Mahlgrad) vermahlen. Dann wird mit Wasser auf eine Gesamtstoffkonzentration von 1,7% verdünnt und diese Zubereitung, gegebenenfalls nach Hilfsmittelzusatz, zu den Papieren weiterverarbeitet.

Die Papiere haben ein Flächengewicht von ca. 80 g/m².

Die zur Beurteilung der Leimung verwendete Tintenschwimmprobe (TSP) wird wie folgt durchgeführt:

Die Papiere werden als Streifen von 2×8 cm auf Prüftinte nach DIN 53126 gelegt und der Tintendurchschlag nach der angegebenen Prüfzeit visuell wie folgt beurteilt:

1 = kein Durchschlagen
2 = geringer Durchschlag bis zu ca. 5% der Fläche
3 = deutlicher Durchschlag, ca. 5–15% der Fläche

4 = etwa 50%iger Durchschlag
5 = völliger Durchschlag.

Eine andere Prüfmethode ist die Bestimmung der Wasseraufnahme auf folgende Weise:

Die lufttrocken ausgewogenen Prüfstreifen des Papiers werden 1 Minute in Wasser bei 20°C getaucht, dann zwischen Filterpapier abgepresst und gewogen. Die Gewichtszunahme wird als Wasseraufnahme in Gramm pro $m^2$ Papier angegeben. Gute Papiere haben geringe Wasseraufnahmewerte.

Polymerisat 53

Man stellt ein Monomergemisch folgender Zusammensetzung bei Raumtemperatur her:

250 Tle Styrol, 450 Tle Acrylsäurebutylester, 150 Tle Acrylnitril (bei ca. 60°C gelöst, dann wieder abgekühlt), 15 Tle Maleinanhydrid (bei ca. 60°C gelöst, dann wieder abgekühlt), 15 Tle Enolether c (Monomertyp e), 1 Tl t-Butylperoctoat, 1 Tl t-Butylhydroperoxid, 0,4 Tle Dicumylperoxid.

Von diesem Gemisch werden ca. 150 Tle in einem Reaktionsgefäss mit Rührer und Rückflusskühler vorgelegt, dann auf 170° erhitzt. Dann wird der Rest des Monomergemisches in ca. 45 Min. kontinuierlich eingetragen. Dann lässt man unter weiterem Rühren ca. 2 Stunden auspolymerisieren, fügt 187 Tle 1-Amino-3-dimethylaminopropan hinzu und lässt weitere 3 Stunden bei 170°C rühren. Dann wird das Polymerisat als Schmelze abgelassen und nach dem Abkühlen granuliert.

Polymerisat 54

Es wird wie bei Polymerisat 53 gearbeitet, lediglich eine wie folgt veränderte Monomerzusammensetzung gewählt, wobei die Mengen folgender Monomerer verändert werden:

Acrylnitril 100 Tle, Maleinanhydrid 200 Tle.

Polymerisat 55

Im oben beschriebenen Polymerisationsgefäss werden vorgelegt: 250 Tle Butylacrylat, 50 Tle Acrylnitril, 50 Tle Maleinanhydrid und 6 Tle Enolether c wie oben.

Man erhitzt auf 170°C und trägt dann in ca. 30 Min. folgendes Gemisch ein: 150 Tle Styrol, 1,5 Tle Enolether c wie oben, 0,5 Tle t-Butylperoctoat, 0,5 Tle t-Butylhydroperoxid, 0,2 Tle Dicumylperoxid.

Dann wird 3 Stunden nachgerührt und anschliessend mit 75 Tlen 1-Amino-3-dimethylaminopropan versetzt und weitere 3 Stunden nachgerührt. Dann wird die dünnflüssige Schmelze abgelassen und granuliert.

In allen drei Fällen werden 25 Tle Polymerisat in 135 Tln Wasser und 8 Tln Essigsäure bei 50°C zu einer ca. 15%igen wässrigen Zubereitung mit Dispersionscharakter aufgelöst. Sie wird im folgenden als Leimungsmittel 53 bzw. 54 bzw. 55 bezeichnet.

Zur Prüfung wird dem Papierstoff R vor der Blattbildung unter Rühren das Leimungsmittel in der angegebenen Menge, bezogen auf Papierstoff, zugesetzt. Dann wird das Papier hergestellt und bei 100°C ca. 150 Sek. getrocknet.

Man erhält folgende Ergebnisse:

| Einsatzmenge 0,5% | Wasseraufnahme ($g/m^2$) | TSP (nach 10 Min.) |
|---|---|---|
| Leimungsmittel 53 | 71 | 1–2 |
| Leimungsmittel 54 | 73 | 1 |
| Leimungsmittel 55 | 106 | 1 |
| Vergleich | 107 | 5 |

Die Beispiele zeigen die Brauchbarkeit der erfindungsgemässen sehr einfach herstellbaren Leimungsmittelzubereitungen.

**Patentansprüche**

1. Papierleimungsmittel in Form einer wässrigen Zubereitung von Maleinanhydrid-Copolymerisaten, deren Anhydridgruppen entweder mit der 0,2- bis 10fachen molaren Menge an organischen oder anorganischen Basen umgesetzt worden sind oder mit primär-tertiären Diaminen und die Reaktionsprodukte anschliessend mit Epichlorhydrin oder mit anorganischen oder organischen Säuren unter Salzbildung umgesetzt worden sind, wobei die Copolymerisate aufgebaut sind aus polymerisierten Einheiten von

a) 5–75 Gew.-% eines Vinylaromaten,
b) 10–75 Gew.-% Acryl- und/oder Methacrylsäure-$C_1$–$C_{18}$-Alkylester,
c) 5–35 Gew.-% Maleinanhydrid,
d) 0–25 Gew.-% weiteren Vinylmonomeren und
e) 0,1–10 Gew.-%, bezogen auf die Summe der Monomeren a)–d), die stets 100 Gew.-% beträgt, eines ungesättigten Aldehyds bzw. eines davon abgeleiteten Enolethers.

2. Verfahren zur Herstellung von Papierleimungsmitteln gemäss Anspruch 1, dadurch gekennzeichnet, dass man ein Monomerengemisch aus

a) 5–75 Gew.-% eines Vinylaromaten,
b) 10–75 Gew.-% Acryl- und/oder Methacrylsäure-$C_1$–$C_{18}$-Alkylester,

c) 5–35 Gew.-% Maleinanhydrid,
d) 0–25 Gew.-% weiteren Vinylmonomeren und
e) 0,1–10 Gew.-%, bezogen auf die Summe von a)–d), die stets 100 Gew.-% beträgt, eines ungesättigten Aldehyds bzw. eines davon abgeleiteten Enolethers

bei 120–250°C unter Rühren und Zusatz von 0,01–3 Gew.-%, bezogen auf die Summe von a)–d), Radikalinitiatioren polymerisiert, die Anhydridgruppen des entstandenen Polymerisats entweder mit anorganischen und/oder organischen Basen umsetzt und die Umsetzungsprodukte während oder nach ihrer Herstellung in eine wässrige Zubereitung überführt oder mit primär-tertiären Diaminen und das Reaktionsprodukt anschliessend mit Epichlorhydrin oder mit anorganischen oder organischen Säuren unter Salzbildung umsetzt und die Umsetzungsprodukte während oder nach ihrer Herstellung in eine wässrige Zubereitung überführt.

3. Verfahren nach Anspruch 2, dadurch gekennzeichnet, dass man zur Polymerisation

a) Styrol,
b) n-Butylacrylat,
c) Maleinanhydrid,
d) Acrylnitril und
e) Enolether von 1,2,5,6-Tetrahydrobenzaldehyd

einsetzt und das erhaltene Polymerisat entweder mit Ammoniak oder mit 1-Dimethylaminopropylamin-3 und anschliessend mit Epichlorhydrin oder Essigsäure umsetzt.

4. Verfahren nach Anspruch 2 oder 3, dadurch gekennzeichnet, dass die Polymerisation in Abwesenheit von Lösungsmitteln durchgeführt wird.

## Claims

1. Paper sizing agents in the form of an aqueous preparation of maleic acid anhydride copolymers of which the anhydride groups have been reacted either with from 0.2 to 10 times the molar quantity of organic or inorganic bases or with primary-tertiary diamines and the reaction products subsequently reacted with epichlorohydrin or with inorganic or organic acids to form salts, the copolymers being made up of polymerised units of

(a) from 5 to 75%, by weight, of an aromatic vinyl compound;
(b) from 10 to 75%, by weight, of acrylic acid and/or methacrylic acid $C_1$–$C_{18}$ alkyl ester;
(c) from 5 to 35%, by weight, of maleic acid anhydride;
(d) from 0 to 25%, by weight, of other vinyl monomers; and
(e) from 0.1 to 10%, by weight, based on the sum of monomers (a) to (d) (which amounts to 100%, by weight), of an unsaturated aldehyde or of an enol ether derived therefrom.

2. A process for producing the paper sizing agents claimed in Claim 1, characterised in that a monomer mixture of

(a) from 5 to 75%, by weight, of an aromatic vinyl compound;
(b) from 10 to 75%, by weight, of acrylic and/or methacrylic acid $C_1$–$C_{18}$ alkyl ester;
(c) from 5 to 35%, by weight, of maleic acid anhydride;
(d) from 0 to 25%, by weight, of other vinyl monomers; and
(e) from 0.1 to 10%, by weight, based on the sum of (a) to (d) (which amounts to 100%, by weight), of an unsaturated aldehyde or of an enol ether derived therefrom;

is polymerised, with stirring, at from 120 to 250°C in the presence of 0.01 to 3%, by weight, based on the sum of (a) to (d), of radical initiators, the anhydride groups of the polymer formed are reacted either with inorganic and/or organic bases and the reaction products are converted into an aqueous preparation during or after production or with primary-tertiary diamines and the products of this reactiuon subsequently reacted with epichlorohydrin or with inorganic or organic acids to form salts and the reaction products are converted into an aqueous preparation during or after production.

3. A process as claimed in Claim 2, characterised in that

(a) styrene;
(b) n-butyl acrylate;
(c) maleic acid anhydride;
(d) acrylonitrile; and
(e) enol ethers of 1,2,5,6-tetrahydrobenzaldehyde;

are used for polymerisation and the polymer obtained is reacted either with ammonia or with 1-dimethylamino-3-propylamine and then with epichlorohydrin or acetic acid.

4. A process as claimed in Claim 2 or 3, characterised in that polymerisation is carried out in the absence of solvents.

## Revendications

1. Colle pour papier à l'état de composition aqueuse de copolymères de l'anhydride maléique dont on a fait réagir les groupes anhydride, soit avec la quantité 0,2 à 10 fois molaire de bases organiques ou minérales, soit avec des diamines primaires-tertiaires, après quoi on a fait réagir les produits de réaction avec l'épichlorhydrine ou avec des acides minéraux ou organiques avec formation de sels, les copolymères étant constitués de motifs polymérisés de:

a) 5 à 75% en poids d'un composé vinylaromatique,
b) 10 à 75% en poids d'acrylates et/ou méthacrylates d'alkyle en $C_{1-18}$,

c) 5 à 35% en poids d'anhydride maléique,

d) 0 à 25% en poids d'autres monomères vinyliques, et

e) 0,1 à 10% en poids, par rapport à la somme des monomères a) à d), qui est toujours de 100% en poids, d'un aldéhyde insaturé ou d'un éther d'énol dérivant d'un tel aldéhyde.

2. Procédé de préparation des colles pour papier selon la revendication 1, caractérisé en ce que l'on polymérise un mélange de monomères consistant en:

a) 5 à 75% en poids d'un composé vinylaromatique,

b) 10 à 75% en poids d'acrylates et/ou méthacrylates d'alkyle en $C_1$–$C_{18}$,

c) 5 à 35% en poids d'anhydride maléique,

d) 0 à 25% en poids d'autres monomères vinyliques, et

e) 0,1 à 10% en poids, par rapport à la somme de a) à d), qui est toujours égale à 100% en poids, d'un aldéhyde insaturé ou d'un éther d'énol dérivant d'un tel aldéhyde,

à 120–250°C, sous agitation, avec adjonction de 0,01 à 3% en poids, par rapport à la somme de a) à d), d'inducteurs radicalaires, on fait réagir les groupes anhydride du polymère formé, soit avec des bases minérales et/ou organiques et on convertit les produits de réaction durant ou après leur préparation en une composition aqueuse, soit avec des diamines primaires-tertiaires et on fait ensuite réagir le produit de réaction, durant ou après leur préparation, en une composition aqueuse.

3. Procédé selon la revendication 2, caractérisé en ce que l'on utilise pour la polymérisation

a) le styrène,

b) l'acrylate de n-butyle,

c) l'anhydride de maléique,

d) l'acrylonitrile, et

e) un éther d'énol du 1,2,5,6-tétrahydrobenzaldéhyde, et on fait réagir le polymère obtenu soit avec l'ammoniac, soit avec la 1-diméthylaminopropylamine-3 et ensuite avec l'épichlorhydrine ou l'acide acétique.

4. Procédé selon la revendication 2 ou 3, caractérisé en ce que l'on effectue la polymérisation en l'absence de solvant.